# EUROPEAN PATENT APPLICATION

(11) **EP 4 554 039 A1**
(43) Date of publication of application: **14.05.2025**
(21) Application number: 23208539.9
(22) Date of filing: 08.11.2023
(51) Int. Cl.: H02J 7/00, B60L 53/62, B60L 58/13, B60L 53/66

(54) **ADAPTING CHARGE LEVEL OF A BATTERY**

(71) Applicant: VOLVO TRUCK CORPORATION, 405 08 Göteborg (SE)
(72) Inventor: NORDHOLM, Linus, 436 40 Askim (SE); WILHELMSSON, Martin, 423 39 Torslanda (SE)
(74) Representative: Kransell & Wennborg KB

(57) **Abstract**

In an aspect, a computer system (14) comprising processing circuitry (11) is provided. The processing circuitry (11) is configured to acquire (S101), from historical battery charging data, information indicating a starting energy level (20) and an ending energy level (21) for a battery (15) during previous charging sessions, determine (S102), from the acquired information, whether the starting energy level (20) exceeds a set energy threshold value (T_{E}); and if so to decrease (S103) a target charge level being applied during an upcoming charging session for the battery (15), the decreased target charge level being applied such that an expected energy level (20) of the battery (15) at upcoming charging sessions is decreased to the set energy threshold value (T_{E}).

## Description

### TECHNICAL FIELD

The disclosure relates generally to determining and adapting charge level of a battery. In particular aspects, the disclosure relates to decreasing a charge level of a battery based on historical battery charging data. The disclosure can be applied in heavy-duty vehicles, such as trucks, buses, and construction equipment. Although the disclosure may be described with respect to a particular vehicle, the disclosure is not restricted to any particular vehicle.

### BACKGROUND

A user of an electrical vehicle will occasionally have to recharge a battery of the vehicle at a battery charging station.

Generally, it is desirable to avoid charging a battery to a too high energy level, since it has been shown that high energy levels may increase battery ageing and thus decrease battery lifetime.

### SUMMARY

According to a first aspect of the disclosure, a computer system is provided comprising processing circuitry configured to acquire, from historical battery charging data, information indicating a starting energy level and an ending energy level for a battery during previous charging sessions, determine, from the acquired information, whether the starting energy level exceeds a set energy threshold value, and if so to decrease a target charge level being applied during an upcoming charging session for the battery, the decreased target charge level being applied such that an expected starting energy level of the battery at upcoming charging sessions is decreased to the set energy threshold value.

The first aspect of the disclosure may seek to resolve an issue of charging a battery to a too high energy level, since it has been shown that high energy levels may increase battery ageing and thus decrease battery lifetime. A technical benefit may include to increase battery lifetime.

In some examples, the target charge level is decreased by an amount with which the starting energy level is determined to exceed the set energy threshold value.

In some examples, the processing circuitry is configured to, upon determining from the acquired information whether the starting energy level exceeds a set energy threshold value, select a lowest starting energy level of the starting energy levels of the acquired historical battery charging data.

In some examples, the processing circuitry is configured to, upon determining from the acquired information whether the starting energy level exceeds a set energy threshold value, compute an average or median value of the starting energy levels of the acquired historical battery charging data.

In some examples, the processing circuitry is configured to, upon determining from the acquired information whether the starting energy level exceeds a set energy threshold value, discard starting energy levels considered to be outliers in the acquired historical battery charging data.

In some examples, the processing circuitry is configured to, upon determining from the acquired information whether the starting energy level exceeds a set energy threshold value, allow a user of the battery to set the energy threshold value.

In some examples, the processing circuitry is configured to, upon determining from the acquired information whether the starting energy level exceeds a set energy threshold value, set the energy threshold value to a predetermined offset value from a minimum allowable energy level for the battery.

In some examples, the processing circuitry is further configured to maintain the target charge level being applied during an upcoming charging session for the battery upon determining that the starting energy level is at the set energy threshold value.

In some examples, the processing circuitry is further configured to increase the target charge level being applied during an upcoming charging session for the battery such that the expected starting energy level reaches the set energy threshold value upon determining that the starting energy level is below the set energy threshold value.

In some examples, the processing circuitry is further configured to, upon decreasing a target charge level being applied during an upcoming charging session for the battery, upload said target charge level to a remotely located device for application at other batteries.

In some examples, a vehicle is provided comprising the computer system of the first aspect.

In some examples, a battery charging station is provided comprising the computer system of the first aspect.

According to a second aspect of the disclosure, a computer-implemented method is provided comprising acquiring from historical battery charging data, by processing circuitry of a computer system, information indicating a starting energy level and an ending energy level for a battery during previous charging sessions, determining from the acquired information, by the processing circuitry, whether the starting energy level exceeds a set energy threshold value, and if so decreasing by the processing circuitry, a target charge level being applied during an upcoming charging session for the battery, the decreased target charge level being applied such that an expected starting energy level of the battery at upcoming charging sessions is decreased to the set energy threshold value.

In some examples, a computer program product is provided comprising program code for performing, when executed by the processing circuitry, the method of the second aspect.

In some examples, a non-transitory computer-readable storage medium is provided comprising instructions, which when executed by the processing circuitry, cause the processing circuitry to perform the method of the second aspect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
FIG. 1 illustrates a vehicle in the form of a truck in which examples of the present disclosure may be implemented.
FIG. 2 shows an exemplary system diagram of a computer system with which the truck of FIG. 1 is equipped according to the present disclosure.
FIG. 3 illustrates an example of battery charge/discharge cycles.
FIG. 4 shows a flowchart illustrating an example method according to the present disclosure.
FIG. 5 illustrates an example of battery charge/discharge cycles after having implemented the example method of FIG. 4.
FIG. 6 shows a flowchart illustrating another example method according to the present disclosure.
FIG. 7 illustrates another example of battery charge/discharge cycles.
FIG. 8 illustrates an example of battery charge/discharge cycles after having implemented the example method of FIG. 4.
FIG. 9 illustrates a truck communicating with a remotely located device.
FIG. 10 is a schematic diagram of a computer system for implementing examples disclosed herein.

### DETAILED DESCRIPTION

Aspects set forth below represent the necessary information to enable those skilled in the art to practice the disclosure.

A user of an electrical vehicle will occasionally have to recharge a battery of the vehicle at a battery charging station.

Generally, it is desirable to avoid charging a battery to a too high energy level, since it has been shown that high energy levels may increase battery ageing and thus decrease battery lifetime.

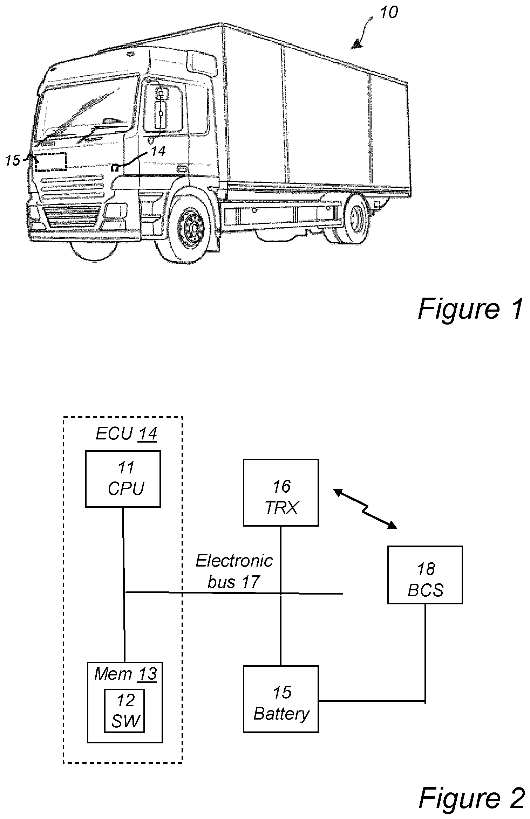

FIG. 1 illustrates a vehicle in the form of a truck 10 in which examples of the present disclosure may be implemented, the truck 10 being equipped with a computer system 14, e.g. in the form of a so-called Electronic Control Unit (ECU) controlling operation of the truck 10.

Further illustrated in FIG. 1 is a rechargeable energy storage system 15 (REESS) arranged to provide electric energy for electric propulsion of the truck 10. The REESS 15 may be embodied in the form of for instance a battery of a supercapacitor. In the following, the REESS will be referred to as a battery.

Although the vehicle 10 in FIG. 1 is depicted as a heavy-duty truck, examples of the present disclosure may be implemented in other types of vehicles, such as in passenger cars, busses, light-duty trucks, mid-duty trucks, construction equipment, motorcycles, marine vessels, etc.

FIG. 2 shows an exemplary system diagram of the computer system 14 with which the truck 10 of FIG. 1 is equipped according to the present disclosure. The computer system 14 will in the following be exemplified by an ECU. The ECU 14 is occasionally referred to as battery management system (BMS) upon being utilized for managing the battery 15.

The ECU 14 generally comprises processing circuitry 11 embodied in the form of one or more microprocessors arranged to execute a computer program (SW) 12 downloaded to a storage medium (Mem) 13 associated with the microprocessor, such as a Random Access Memory (RAM), a Flash memory or a hard disk drive. The processing circuitry 11 is arranged to cause the ECU 14 to perform desired operations when the appropriate computer program 12 comprising computer-executable instructions is downloaded to the storage medium 13 and executed by the processing circuitry 11. The storage medium 13 may also be a computer program product comprising the computer program 12. Alternatively, the computer program 12 may be transferred to the storage medium 13 by means of a suitable computer program product, such as a Digital Versatile Disc (DVD) or a memory stick. As a further alternative, the computer program 12 may be downloaded to the storage medium 13 over a network. The processing circuitry 11 may alternatively be embodied in the form of a digital signal processor (DSP), an application specific integrated circuit (ASIC), a field-programmable gate array (FPGA), a complex programmable logic device (CPLD), etc. The processing circuitry 11 will in the following be referred to as a central processing unit (CPU).

The ECU 14 may further be in communicative communication with a wireless transmitter/receiver 16, commonly referred to as a transceiver (TRX), configured to communicate with remote devices such as e.g. cloud servers, or connected devices such as smart phones, smart watches, other vehicles and/or appropriate components arranged in the truck 10 being capable of wireless communication. The wireless communication of the transceiver 16 may be performed for instance via radio frequency (RF), Bluetooth, a wi-fi provided by a local router, etc.

Further shown in FIG. 2 is the above mentioned battery 15 arranged to provide electric energy for electric propulsion of the truck 10.

Communication between the various components illustrated in FIG. 2 may occur via an electronic communication bus 17 such as e.g., a Controller Area Network (CAN) bus, a Local Interconnect Network (LIN) bus, an Ethernet bus, etc.

Also shown is battery charging station 18 (BCS) to which the battery 15 is connected for charging. The ECU 14 may be in communicative connection with the battery charging station 18 either wirelessly via the transceiver 16 or via the communication bus 17.

As mentioned, it is generally desirable to avoid charging the battery 15 to a too high energy level, since it has been shown that high energy levels may increase ageing of the battery 15.

This is resolved in an example of the present disclosure as will be described by the ECU 14 analyzing historical information indicating a starting energy level and an ending energy level for the battery during previous charging sessions. If it is shown that the starting energy levels are unnecessarily high, a target charge level applied during the charging sessions for supplying the battery with energy can be decreased which may increase battery life.

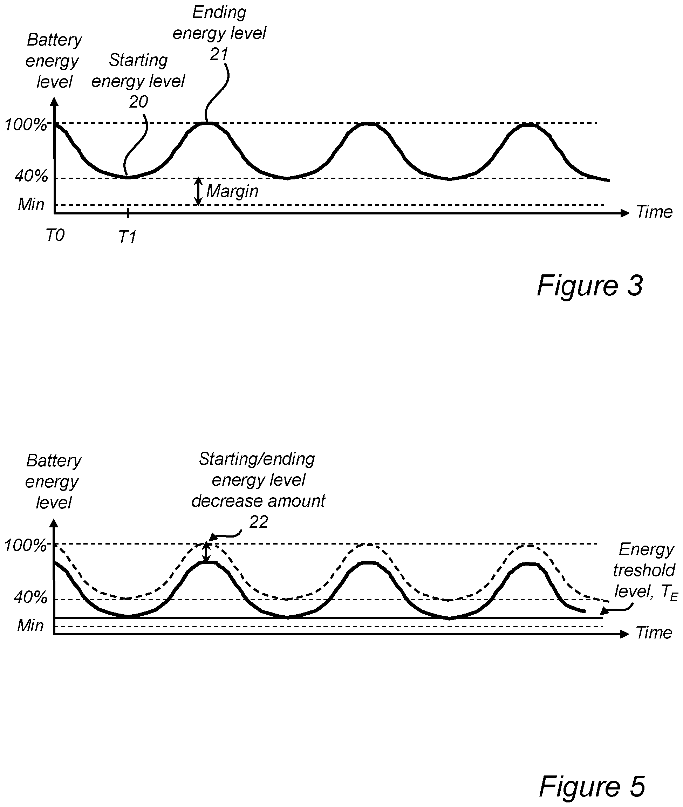

FIG. 3 illustrates an example of charge/discharge cycles of the battery 15. At T0, the battery is fully charged at a battery charging station. In this example, the battery 15 is fully charged to an energy level of 100%. As the user drives the truck 10, the battery will gradually discharge and at T1 have reached an exemplifying energy level of 40%, where the battery is charged anew. As is understood, this cycle may be repeated again and again.

As illustrated in FIG. 3, while there is a minimum allowable energy level (> 0, in FIG. 3 roughly 10%) that the energy of the battery 15 generally should not fall below, the energy level at which the battery 15 is to be charged anew is not necessarily 40%, but could e.g. amount to 15, 20 or 30%. Similarly, the battery 15 is not necessarily fully charged to 100% during a charging session but may be charged to an energy level of for instance 70, 80 or 90%.

The energy level from which the battery 15 is charged during a charging session (i.e. 40% in FIG. 3) is referred to as the *starting energy level* 20 in the following, while the energy level to which the battery 15 is charged during a charging session (i.e. 100% in FIG. 3) is referred to as the *ending energy level* 21.

Now, looking at the behavior of the user of the truck 10 over multiple charge/discharge cycles illustrated by the historical battery charging data in FIG. 3, where the starting energy level of a charging session is at 40% and the battery is being charged to the ending energy level 100% over repeated charging sessions, it is clear that there is quite a margin between the starting energy level of a charging session and the minimum allowable energy level.

In other words, during a work shift, the truck 10 will typically consume 60% of the energy being supplied to the battery 15 during a charging session.

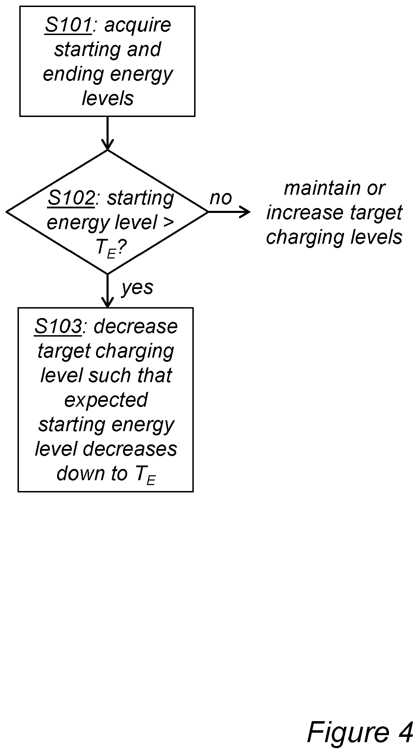

FIG. 4 shows a flowchart illustrating an example method of taking this margin into consideration with an aim to increase the lifetime of the battery 15.

Reference will further be made to FIG. 5 illustrating a modified charge/discharge cycle in the light of the example method.

In S101, the ECU 14 acquires, from historical battery charging data, information indicating a starting energy level and an ending energy level for the battery 15 during previous charging sessions.

In this particular example, the starting energy level is at 40% while the ending energy level is at 100%.

Assuming further that the ECU 14 has access to an energy threshold value T_{E} that the starting energy level of a charging session preferably should be equal to. This value may be set by the user of the truck 10 via e.g. a smart phone app or a human-machine interface (HMI) of the truck 10, or by the ECU 14 itself as a given offset from the minimum allowable energy level if the ECU 14 has access to the historical battery charging data. It is assumed in this example that the energy threshold value T_{E} is set to 20%.

In S102, the ECU 14 determines from the acquired historical battery charging data whether the starting energy level of a charging session exceeds the set energy threshold value T_{E}. In this particular example, the starting energy level of the charging sessions amounts to 40%, while the energy threshold value T_{E} is set to 20%, i.e. the starting energy level is well above the energy threshold value T_{E}.

The ECU 14 will thus in S103 decrease a target charge level being applied during upcoming charging sessions for the battery 15 such that an expected starting energy level of the battery at the upcoming charging sessions is decreased down to the set energy threshold value T_{E}. This may be performed by decreasing the power supplied to the battery 15 during the charging session and/or by decreasing the duration of the charging session, thus resulting in a decreased target charge level.

Thus, with reference to FIG. 5, rather than charging the battery 15 to 100% (as shown in FIG. 3 and indicated in FIG. 5 by means of the dashed-line curve) as performed during previous charging sessions, the target charge level of the battery 15 is decreased in S103 such that the battery 15 is charged to an ending energy level of 80%, which results in an expected starting energy level of 20% - as indicated by the solid-line curve - for upcoming charging sessions (given that future charge/discharge cycles correspond to those indicated by the historical data.

Thus, in practice, the target charge level is decreased by the same amount 22 with which the expected starting energy level is decreased (indicated by means of a double arrow in FIG. 5), i.e. the target charge level is decreased with the difference between the starting energy level and the set energy threshold value T_{E}, which has as a result that the expected ending energy level will decrease accordingly.

In other words, by decreasing the target charge level with an amount corresponding to the difference between the starting energy level and the set energy threshold value T_{E} - in this example a decrease with 20% - the expected ending energy level and the expected starting energy level during upcoming charging sessions will decrease accordingly from 100% to 80% and from 40% to 20%, respectively.

Advantageously, the energy supplied to the battery 15 at upcoming charging sessions (as stipulated by the decreased target charge level) will be greatly reduced, thereby increasing the lifetime of the battery 15 while not affecting the user experience in terms of battery performance and vehicle driving range.

While 60% of the total amount of energy of the battery 15 was consumed in the example of FIG.3, 75% of the total amount of energy is consumed in the example of FIG. 5, which provides for a more efficient battery utilization.

As is understood, some margin between the energy threshold value T_{E}. and the minimum allowable energy level is preferred since there is otherwise a risk that the battery 15 will be discharged during a work shift of the truck 10, should the energy level of the battery 15 fall below the minimum allowable energy level.

Should the starting energy level of the charging session not be above the set energy threshold value T_{E}, it may either be that the starting energy level already has been decreased down to T_{E} as desired, in which case the target energy level applied during the charging session is maintained, or that the starting energy level has fallen below T_{E} as desired, in which case the target energy level applied during the charging session may be increased.

As is further understood, the energy level of the battery 15 may fall below the threshold value T_{E} during operation of the truck 10, but may then be increased to again reach the threshold value T_{E} by means of so-called recuperation where energy of the battery is recovered from braking of the truck 10. If the energy falls below the minimum allowable energy level, it may be that the level of energy that can be provided by the battery 15 is too low for the truck to continue operation.

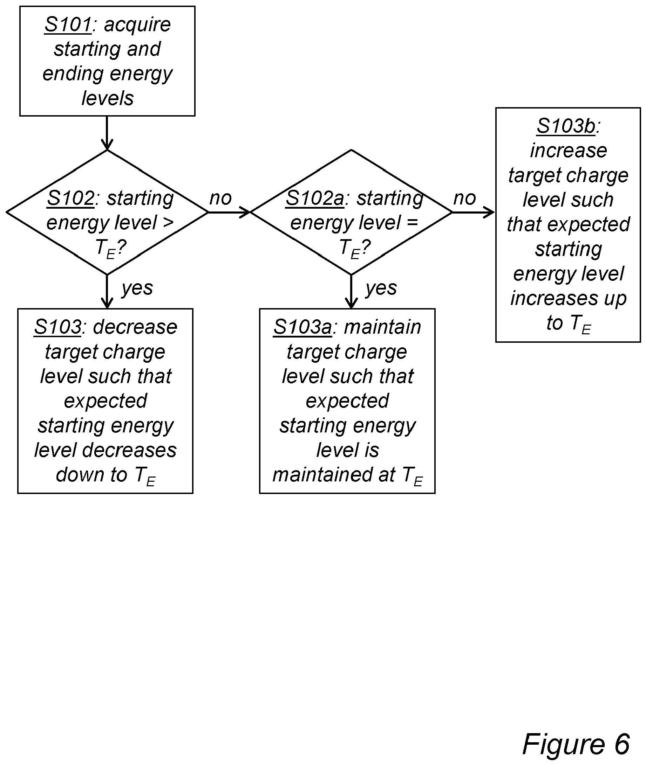

FIG. 6 shows a flowchart illustrating an example method where the target charge level applied to the battery 15 during an upcoming charging session is maintained or increased.

Hence, assuming that in S102 the ECU 14 determines that the starting energy level of the charging sessions of the historical battery charging data is not above the set energy threshold value T_{E}; the ECU 14 will then proceed to S 102a where the ECU 14 may conclude that the starting energy level already has been decreased down to T_{E} as desired, in which case the target energy level applied during an upcoming charging session is maintained.

In contrast, should the ECU 14 determine in S 102b from the historical battery charging data that the starting energy level is below the set energy threshold value T_{E}, the target energy level applied during an upcoming charging session may be increased, such that that the starting energy level eventually reaches the set energy threshold value T_{E}.

As is understood, in practice a minor deviation of the starting energy level from T_{E} may be allowed while still considering the starting energy level to be at T_{E} in order to avoid unnecessary changes in the target charge level stipulating the energy supplied to the battery 15 during a charging session.

While in the above examples, the ECU 14 is described to perform steps of the example methods, it may be envisaged that the described steps alternatively are performed by the battery charging station effecting the charging of the battery 15.

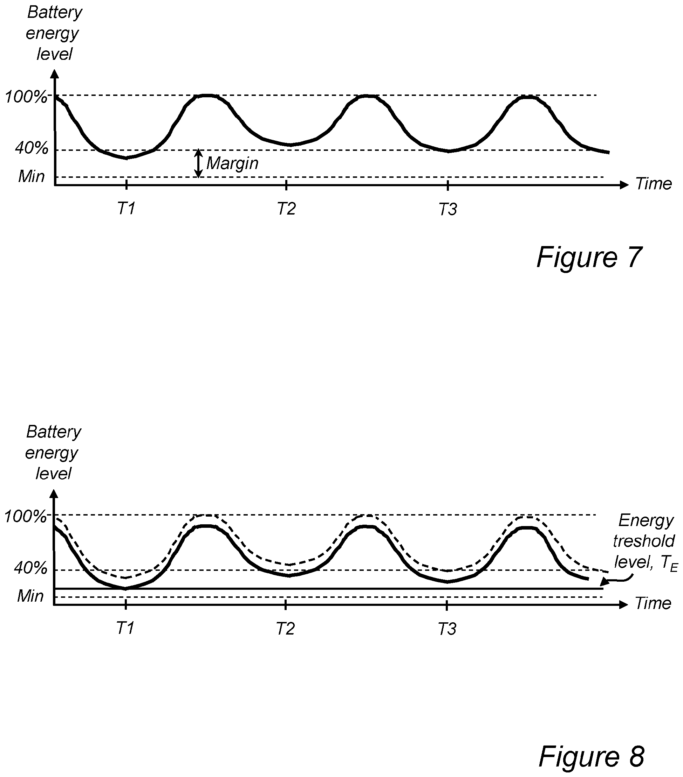

FIG. 7 illustrates another example of charge/discharge cycles of the battery 15, where the starting energy level at each charging session of the historical battery charging data varies. For instance, at T1, the starting energy level is below 40% at around 30%, while at T2 the starting energy level is slightly above 40% at around 45%. At the third charging session starting at T3, the energy starting level is 40% as in previous examples.

This may be the result of a slightly longer work-shift before session T1, or a more demanding work operation being undertaken.

FIG. 8 illustrates that upon the ECU 14 determining in S 102 whether the starting energy level of the acquired historical battery charging data (indicated with the dashed-line curve) exceeds the set energy threshold value T_{E} of 20%, the ECU 14 will base the decision on the lowest starting energy level for the three charging sessions.

The ECU 14 will in S 103 thus decrease the target charge level being applied during upcoming charging sessions for the battery 15 such that the expected starting energy level of the battery at the upcoming charging sessions is decreased down to the set energy threshold value T_{E} by determining that the decrease to be applied should be based on the lowest starting energy level for the three charging sessions, i.e. a decrease from 30% down to the energy threshold value T_{E} set to 20%.

Thus, in contrast to the previous examples, the target charge level will be decreased such that the expected ending energy level during upcoming charging sessions is decreased to 90%, rather than to 80%.

As is understood, in practice, far more charging sessions than three would generally be taken into account upon acquiring historical charging session data. It may further be envisaged that a small number of outliers as regards the starting energy level may be discarded upon determining whether or not a starting energy value exceeds T_{E}. For instance, assuming that historical battery charging data pertaining to a hundred previous charging sessions is acquired in S101, and that 2-3 charging sessions has a lower starting energy level than the remaining 97-98 charging sessions, then these 2-3 starting energy level are considered outliers and may be discarded.

In another example, the starting energy level from which the decrease down to T_{E} is to be determined is the average starting energy level of the three charging sessions, resulting in (30 + 45 + 40)/3 = 38% using the historical battery charging data of FIG. 8.

In yet an example, the starting energy level from which the decrease down to T_{E} is to be determined is the median starting energy level of the three charging sessions, i.e. the 40% value at second charging session T2 using the historical battery charging data of FIG. 8.

While in the above examples the target charge level is decreased such that the expected ending energy level at an upcoming charging session is below 100%, the user may at any time request to a full charge of the battery 15 if desired.

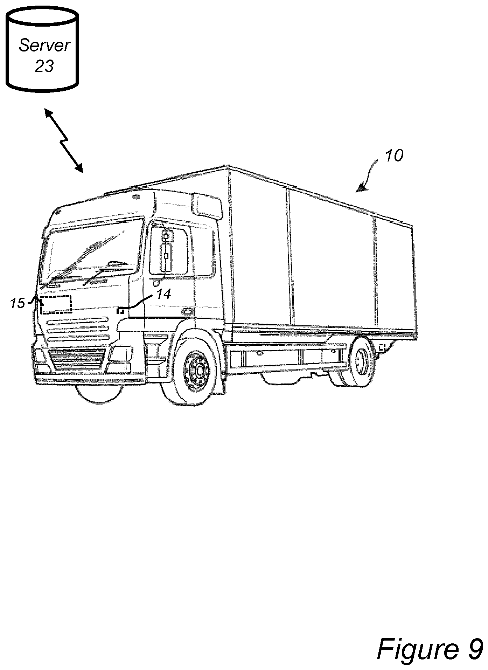

FIG. 9 illustrates an example where the ECU 14 of the truck 10 uploads (via the transceiver 16) to a remotely located server 23 the target charge level to be applied as determined in S103, and possibly also the historical battery charging data on which the target charge level is based. Advantageously, the uploaded data may be used by other vehicles having a similar battery 15, such as vehicles belonging to the same company or fleet as the truck 10.

As is understood, the historical battery charging data as illustrated e.g. in FIG. 3 may depend on ambient conditions such as ambient temperature, weather conditions or seasonal conditions. Such conditions may be taken into account upon adapting the target charge level in S103. For instance, it may be that the acquired historical battery charging data was recorded at in Summer while the current season is Winter, in which case the energy threshold value T_{E} may be set higher to compensate for the tougher ambient conditions.

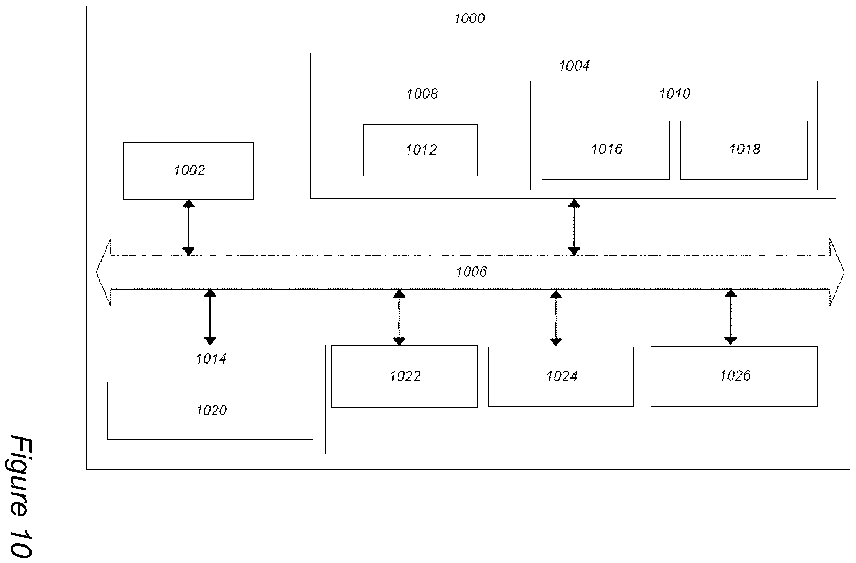

FIG. 10 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (14) comprising processing circuitry (11) configured to:
acquire (S101), from historical battery charging data, information indicating a starting energy level (20) and an ending energy level (21) for a battery (15) during previous charging sessions;
determine (S102), from the acquired information, whether the starting energy level (20) exceeds a set energy threshold value (T_{E}); and if so to
decrease (S103) a target charge level being applied during an upcoming charging session for the battery (15), the decreased target charge level being applied such that an expected starting energy level (20) of the battery (15) at upcoming charging sessions is decreased to the set energy threshold value (T_{E}).

2. The computer system (14) of claim 1, wherein the target charge level is decreased by an amount (22) with which the starting energy level (20) is determined (S102) to exceed the set energy threshold value (T_{E}).

3. The computer system (14) of any one of the preceding claims, the processing circuitry (11) being configured to, upon determining (S102) from the acquired information whether the starting energy level (20) exceeds a set energy threshold value (T_{E});
select, for the determining (S102), a lowest starting energy level of the starting energy levels (20) of the acquired historical battery charging data.

4. The computer system (14) of any one of the preceding claims, the processing circuitry (11) being configured to, upon determining (S102) from the acquired information whether the starting energy level (20) exceeds a set energy threshold value (T_{E});
compute, for the determining (S102), an average or median value of the starting energy levels (20) of the acquired historical battery charging data.

5. The computer system (14) of any one of the preceding claims, the processing circuitry (11) being configured to, upon determining (S102) from the acquired information whether the starting energy level (20) exceeds a set energy threshold value (T_{E});
discard, for the determining (S102), starting energy levels (20) considered to be outliers in the acquired historical battery charging data.

6. The computer system (14) of any one of the preceding claims, the processing circuitry (11) being configured to, upon determining (S102) from the acquired information whether the starting energy level (20) exceeds a set energy threshold value (T_{E});
allow a user of the battery (15) to set the energy threshold value (T_{E}).

7. The computer system (14) of any one of the preceding claims, the processing circuitry (11) being configured to, upon determining (S102) from the acquired information whether the starting energy level (20) exceeds a set energy threshold value (T_{E});
set the energy threshold value (T_{E}) to a predetermined offset value from a minimum allowable energy level for the battery (15).

8. The computer system (14) of any one of the preceding claims, the processing circuitry (11) further being configured to:
maintain (S103a) the target charge level being applied during an upcoming charging session for the battery (15) upon determining (S102a) that the starting energy level (20) is at the set energy threshold value (T_{E}).

9. The computer system (14) of any one of the preceding claims, the processing circuitry (11) further being configured to:
increase (S103b) the target charge level being applied during an upcoming charging session for the battery (15) such that the expected starting energy level (20) reaches the set energy threshold value (T_{E}) upon determining (S102a) that the starting energy level (20) is below the set energy threshold value (T_{E}).

10. The computer system (14) of any one of the preceding claims, the processing circuitry (11) further being configured to, upon decreasing (S103) a target charge level being applied during an upcoming charging session for the battery (15):
upload said target charge level to a remotely located device (23) for application at other batteries.

11. A vehicle (10) comprising the computer system (14) of any of claims 1-10.

12. A battery charging station (18) comprising the computer system (14) of any of claims 1-10.

13. A computer-implemented method, comprising:
acquiring (S101) from historical battery charging data, by processing circuitry (11) of a computer system (14), information indicating a starting energy level (20) and an ending energy level (21) for a battery (15) during previous charging sessions;
determining (S102) from the acquired information, by the processing circuitry (11), whether the starting energy level (20) exceeds a set energy threshold value (T_{E}); and if so
decreasing (S103) by the processing circuitry (11), a target charge level being applied during an upcoming charging session for the battery (15), the decreased target charge level being applied such that an expected starting energy level (20) of the battery (15) at upcoming charging sessions is decreased to the set energy threshold value (T_{E}).

14. A computer program product comprising program code (13) for performing, when executed by the processing circuitry (11), the method of claim 13.

15. A non-transitory computer-readable storage medium (12) comprising instructions (13), which when executed by the processing circuitry (11), cause the processing circuitry (11) to perform the method of claim 13.
